**Europäisches Patentamt**

**European Patent Office**

**Office européen des brevets**

(19)

(11) Veröffentlichungsnummer: **0 197 269 B1**

(12) **EUROPÄISCHE PATENTSCHRIFT**

(45) Veröffentlichungstag der Patentschrift: **12.06.91**

(51) Int. Cl.⁵: **C01F 7/06, C01F 7/46**

(21) Anmeldenummer: **86102235.8**

(22) Anmeldetag: **20.02.86**

(54) **Verfahren zur Verminderung der organischen Bestandteile in Aluminatlaugen.**

(30) Priorität: **04.04.85 DE 3512404**

(43) Veröffentlichungstag der Anmeldung:
**15.10.86 Patentblatt 86/42**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**US-A- 4 115 264**
**US-A- 4 215 094**

(73) Patentinhaber: **VEREINIGTE ALUMINIUM-
WERKE AKTIENGESELLSCHAFT**
**Berlin - Bonn Postfach 2468 Georg-
von-Boeselager-Strasse 25**
**W-5300 Bonn 1(DE)**

(72) Erfinder: **Brown, Neil, Dr.Dipl.-Chem.**
**Friedrichstrasse 43**
**W-5300 Bonn 1(DE)**
Erfinder: **Kudermann, Gerhard, Dr.Dipl.-Chem.**
**Henri-Spaak-Strasse 19**
**W-5305 Alfter 4(DE)**
Erfinder: **Fuchs, Manfred**
**Altenberger Gasse 61**
**W-5303 Bornheim 4(DE)**

(74) Vertreter: **Müller-Wolff, Thomas, Dipl.-Ing.**
**Georg-von-Boeselager-Strasse 25 Postfach
2468**
**W-5300 Bonn 1(DE)**

## Beschreibung

Die Erfindung betrifft ein Verfahren zur Verminderung von organischen Bestandteilen in aluminathaltigen Laugen des Bayer-Prozesses durch Oxidation mit sauerstoffhaltigem Gas und erhöhtem Druck in Gegenwart von katalytisch wirkenden Metallionen. Es soll der organisch gebundene Kohlenstoff zu Natriumkarbonat abgebaut werden.

Ein derartiges Verfahren, bei dem Temperaturen bis zu 300°C und Kupferionen von wenigstens 100 mg pro Liter sowie Sauerstoff in zumindest stöchiometrischen Mengen verwendet wird, ist aus US-PS 4,215,094 bekannt. Die dabei verwendeten Kupfersalze werden aus den oxidierten Laugen als Kupfersulfid ausgefällt, das ohne besondere Hilfsmittel nicht leicht zu filtrieren ist.

Die nach dem bekannten Verfahren angestrebten Oxidationsrate (Verhältnis gebildetes $Na_2CO_3$ zu theoretisch möglichem $Na_2CO_3$) liegt zwischen 60 und 85%. Dabei fällt eine erhebliche Menge an Natriumoxalat an, das mit dem Kupfersulfid abgetrennt wird. Zur Rückgewinnung des Katalysators ist eine Nachoxidation des Oxalats erforderlich.

Darüber hinaus besteht die Gefahr, daß das im Bayerverfahren produzierte Aluminiumhydroxid durch nicht-ausgefällte Kupferionen verunreinigt wird. Bei der Oxidation wird aus dem Kupfersulfid ständig neues Sulfat erzeugt, das sich ohne vorsorgliche Abtrennung in der Kreislauflauge anreichern kann.

Aufgabe der vorliegenden Erfindung ist es, das Verfahren zur Verminderung der organischen Bestandteile in aluminathaltigen Laugen der eingangs genannten Art derart zu verbessern, daß die oxidierten Laugen leicht filtrierbar, die Oxidationsrate ohne Nachteile für die Filtrierung über 85% gesteigert und die Gefahr der Verunreinigungen des Hauptkreislaufs beseitigt wird.

Die vorliegende Erfindung beschreibt ein Oxidationsverfahren mit Metallionen als Katalysator ohne die Schwierigkeiten, die bei der Filtration von Kupfersulfid mit Hilfe von Natriumoxalat und ohne die wirtschaftlichen Nachteile, die durch Abkühlung der Lauge entstehen.

Die wesentlichen Merkmale der Erfindung sind Gegenstand des Anspruchs 1; bevorzugte Merkmale der Erfindung sind Gegenstand der abhängigen Ansprüche 2-10.

Es wurde festgestellt, daß der erfindungsgemäß eingesetzte Katalysator, wenn er in Mengen von 1-5000 mg/l eingesetzt wurde, vorzugsweise 500 mg/l, quantitativ, d.h. bis unter 1 mg/l, durch Mitfällung an Aluminiumhydroxid aus der oxidierten Lauge entfernt werden kann. Der kristalline Niederschlag ist leicht zu filtrieren und kann direkt als Kalysatorträger zurückgeführt und wieder eingesetzt werden. Somit kann ein Oxidationsgrad über 85% angestrebt und eine vollständigere Oxidation der Organica zu Natriumkarbonat realisiert werden.

Ein bevorzugter Anwendungsfall der vorliegenden Erfindung besteht darin, als Katalysator Kupferionen einzusetzen und die Fällungsbedingungen so einzurichten, daß im wesentlichen Böhmit als Aluminiumhydroxid ausgefällt wird.

Der Einsatz des kupferhaltigen Böhmitniederschlags läuft in folgenden Stufen ab. Ein Teil der Lauge wird in einen Seitenstrom geleitet. Der zu oxidierenden Lauge wird rezyklierter kristalliner kupferhaltiger Böhmit zugegeben. Beim Aufheizen der Lauge auf Reaktionstemperatur in Gegenwart der erforderlichen Mengen Sauerstoff zur Oxidation der Organica löst sich der kupferhaltige Böhmit auf und das katalytisch wirkende Kupfer geht in Lösung. Durch die Bildung von Natriumkarbonat und eine gesteuerte Temperaturerniedrigung am Ende der Oxidation wird im Autoklaven die Fällung von Böhmit und die Mitfällung des Kupfers erreicht. Nach weiterer Abkühlung unter Normaldruck kann der kupferhaltige Böhmitniederschlag bei etwa 95°C vollständig abgetrennt und rezykliert werden.

Gemäß einer bekannten Verfahrensweise sind Kupfersulfat und Kupfersulfid geeignete Kupferverbindungen. Es ist jedoch ein wesentlicher Fortschritt, wenn man Kupferoxid oder Kupferhydroxid verwenden kann, weil damit keine Sulfationen in die oxidierte Lauge eingetragen werden.

Die Grundlage der Erfindung beruht auf der Tatsache, daß die Aluminiumoxidkonzentration in der Lauge während der Oxidation oder nach der Oxidation wegen der Bildung von Karbonat und der damit verbundenen Abnahme des freien Natriumoxids eine kritische Übersättigung erreichen und deshalb Aluminiumhydroxid ausfallen kann. Dies gilt für Böhmit unter Überdruck in der Regel oberhalb 120°C und für Bayerit bei Normaldruck in der Regel unterhalb 120°C.

Für die Entstehung des kupferhaltigen Böhmit-Niederschlags in einer gut oxidierten Lauge sind der Aluminiumoxidgehalt und organische Kohlenstoffgehalt der Ausgangslauge wichtige Parameter. Um nach der Oxidation der Organica die Bildung des kupferhaltigen Böhmits sicher zu erreichen, muß das Molverhältnis (K) $Na_2O$-frei zu $Al_2O_3$ in der oxidierten Lauge kleiner als oder gleich 1 sein:

$$K = \frac{Na_2O\text{-frei}}{Al_2O_3} \leq 1$$

Wenn in einer Betriebslauge über einen gewissen Zeitraum die Konzentration des organisch gebundenen Kohlenstoffs abnimmt, wird es in der oxidierten Lauge zunehmend weniger zu einer Karbonisierung, d.h. Abbindung des freien Natriumoxids kommen. Bei einem konstanten Oxidationsgrad von z.B. 90% wird selbstverständlich mit der Zeit das erreichbare Molverhältnis $Na_2O$-frei zu $Al_2O_3$ ansteigen.

Fällt die Konzentration des organisch gebundenen Kohlenstoffs in einer Reinlauge unter einen Wert von ca. 12 g/l ab, steigt das bei der Oxidation erreichbare Molverhältnis über 1. An dieser Stelle muß in das System eingegriffen werden, um weiterhin die Bildung von Böhmit zu gewährleisten. Dies kann auf zwei Wegen geschehen.

Zum einem kann der Aluminiumgehalt durch Zugabe einer geeigneten Menge von Aluminiumhydroxid zu dem rezyklierten kupferhaltigen Böhmit erhöht werden, zum anderen kann der freie Natriumoxidgehalt durch Einleiten einer geeigneten Menge $CO_2$-Gas in die zu oxidierende Lauge erniedrigt werden. Es sind auch mäßige Erhöhungen der Reaktionstemperatur und der Sauerstoffmenge wichtige Parameter und können zur Erzielung eines K-Wertes unter 1 genutzt werden, um somit die Bildung von Böhmit sicher zu erreichen.

Wenn aus irgendeinem Grund kein kupferhaltiger Böhmit im Autoklaven ausfällt, sind die Kupferionen noch in Lösung. In diesem Fall kann eine Fällung von Aluminiumhydroxid zur Entfernung des Kupfers aus der oxidierten Lauge geschehen vorzugsweise durch Einleiten einer relativ kleinen Menge $CO_2$ bei 95 °C unter Normaldruck, das die Kristallisation eines kupferhaltigen Bayerits auslöst.

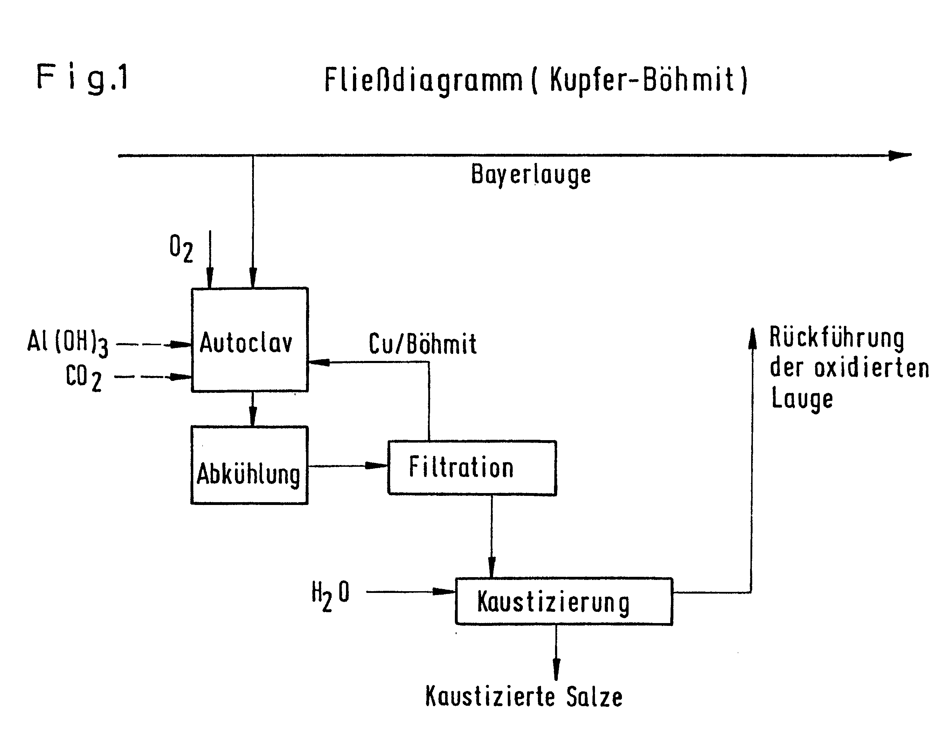

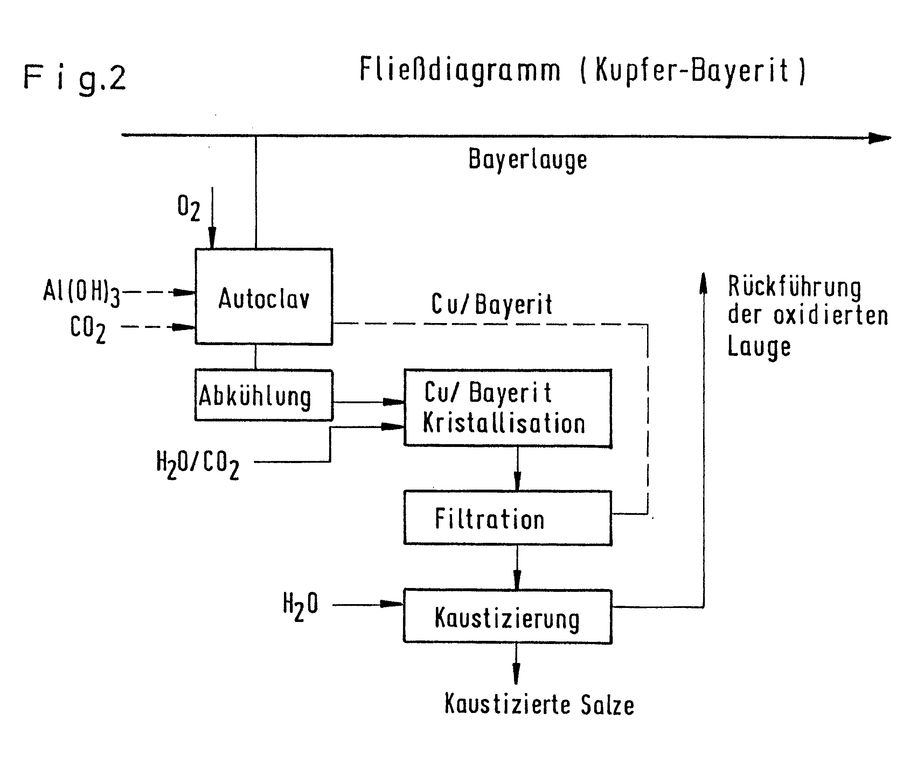

Die vorliegende Erfindung wird für spezielle Anwendungsfälle in den Abbildungen 1 und 2 dargestellt.

In Abb. 1 ist ein Seitenstrom zum Bayerprozeß skizziert. Er enthält die Stufen der Naßoxidation und der Rückführung des Katalysators, die der vorliegenden Erfindung zugrunde liegen. Der Naßoxidation wird ein Teilstrom der Kreislauflauge aus dem Bayer-Prozess zugeführt. Dies kann irgendeine geeignete Lauge sein. In der Regel würde dies eine Reinlauge, Dünnlauge oder Dicklauge oder Mischungen daraus sein. Auf diesem Wege wird die Lauge bei einem vorbestimmten Druck und einer vorbestimmten Temperatur in Gegenwart von Kupferionen, die mit dem rezyklierten Böhmit eingetragen werden, mit Sauerstoffgas in Kontakt gebracht, dessen Menge mindestens der theoretisch erforderlichen entspricht, die zur Oxidation bzw. Zersetzung der organischen Salze in der Lauge benötigt wird.

Die optimale Kontaktzeit im Reaktor ist abhängig von der Temperatur, liegt aber vorzugsweise bei 10 - 60 Minuten. Die organischen Salze in der Lauge werden auf diese Weise beschleunigt abgebaut. Danach wird die Lauge abgekühlt und der kupferhaltige Böhmitniederschlag bei ca. 95 °C abgetrennt. Der kupferhaltige Böhmit wird in die Naßoxidationsstufe zurückgeführt. Die oxidierte Lauge, die jetzt einen hohen Natriumkarbonatgehalt hat, wird in einer weiteren Prozeßstufe kaustiziert. Dazu wird die Lauge auf eine gebundene Natriumoxidkonzentration von nicht mehr als 60 g/l verdünnt und mit Kalk zu Calciumkarbonat und gelöstem Natriumhydroxid umgesetzt. Nach Abtrennung der ausgefallenen Calciumsalze wird die Lauge in den Bayer-Prozeß zurückgeleitet.

In Abb. 2 ist eine weitere Variante der Naßoxidation dargestellt. Sie enthält die Rückführung des Kupfers mit Bayerit. Die Einleitung einer relativ kleinen Menge $CO_2$ unter Normaldruck bei ca. 95 °C löst die Kristallisation von kupferhaltigem Bayerit aus.

In den Abb. 1 und 2 sind die Fließdiagramme der kontinuierlichen Prozesse dargestellt. Die notwendigen Prozeßstufen können aber ebenso in einem diskontinuierlich als auch in einem halbkontinuierlichen Prozeß durchgeführt werden.

Die Anwendung der vorliegenden Erfindung ist an folgenden Beispielen im Detail dargestellt. Die Anwendungsbeispiele stellen keine Begrenzung der Erfindung dar.

Beispiel 1

30 ml einer Dünnlauge (Zusammensetzung: $Na_2O$ frei ca. 140 g/l; $Al_2O_3$ ca. 80 g/l; organischer Kohlenstoffgehalt ca. 26,5 g/l) aus einem Bayer-Prozeß wurden in einem 100 ml korrosionsfreien Stahlautoklaven bei einer Temperatur von 300 °C und einem Sauerstoffdruck von 40 bar (gemessen bei 25 °C in Gegenwart von 500 mg/l Kupfer, das als $CuSO_4 \cdot 5H_2O$ zugegeben wurde, 20 Minuten lang behandelt. Danach wurde die oxidierte Lauge auf ungefähr 95 °C abgekühlt und der kupferhaltige Böhmitniederschlag abfiltriert. Der organische Kohlenstoffgehalt (OC) der oxidierten Lauge betrug 5 g/l, was einem Oxidationsgrad von 81 % entspricht. Der Böhmitniederschlag entsprach einem Aluminiumoxidgehalt von 41 g/l und in der Lauge lag die Kupferkonzentration unter 1 mg/l. Die $Na_2O$ frei Konzentration in der oxidierten Lauge betrug 32,5 g/l (K = 0,67).

Das oben beschriebene Experiment wurde sechsmal mit jeweils weiteren 30 ml der obengenannten Dünnlauge ohne weitere Zugabe von Kupfer wiederholt. Es wurde jeweils nur der gesamte kupferhaltige Böhmitniederschlag aus dem vorangegangenen Versuch wieder eingesetzt. Auch nach dem 6. Oxidationsversuch betrug der OC-Gehalt 5 g/l. Diese Tatsache dokumentiert, daß der Oxidationsgrad erhalten blieb. Die durchschnittliche Böhmitniederschlagsmenge pro Experiment betrug, bezogen auf Aluminiumoxid, 38 g/l.

Der Kupfergehalt der 6. oxidierten Lauge lag unter 1 mg/l. Ein Anstieg der Sulfatkonzentration war nicht zu beobachten.

Beispiel 2

Dünnlauge der gleichen Zusammensetzung wie im Beispiel 1 wurde mit einer OC-freien synthetischen Lauge der gleichen Zusammensetzung auf einen OC-Gehalt von 19,6 g/l verdünnt.

30 ml der in bezug auf den OC-Gehalt verdünnten Dünnlauge wurden wie im Beispiel 1 beschrieben oxidiert. Der OC-Gehalt der oxidierten Lauge lag bei 2 g/l, d.h. der Oxidationsgrad betrug 90 %. Trotz des hohen Oxidationsgrades fiel kein Böhmit aus. Die $Na_2O$ frei Konzentration in der oxidierten Lauge betrug 52 g/l.

Das obengenannte Experiment wurde mit weiteren 30 ml der in bezug auf den OC-Gehalt verdünnten Dünnlauge wiederholt. Es wurden jedoch zusätzlich 56 g/l Aluminiumoxid in Form von Aluminiumhydroxid zugegeben. Nach der Oxidation der Lauge und Abkühlung auf 95 °C waren 40 g/l Aluminiumoxid als Böhmit ausgefallen. Die OC-Konzentration in der oxidierten Lauge betrug 3 g/l, was einem Oxidationsgrad von 85 % entspricht. Die $Na_2O$ frei-Konzentration der oxidierten Lauge betrug 57 g/l (K = 0,69).

Der Kupfergehalt der oxidierten Lauge lag unter 1mg/l. Die Sulfatkonzentration war um 0,75 g/l angestiegen, somit ist der gesamte Sulfatgehalt des zugegebenen $CuSO_4 \cdot 5H_2O$ in der Lauge verblieben. Das Kupfer ist mit dem Böhmit quantitativ, d.h. bis auf eine nicht festgestellte Menge unter 1 mg/l ausgefallen.

Beispiel 3

Dünnlauge derselben Zusammensetzung wie in Beispiel 1 wurde mit einer OC-freien synthetischen Dünnlauge derselben Zusammensetzung auf einen OC-Gehalt von 9,6 g/l verdünnt.

30 ml dieser, in bezug auf den OC-Gehalt verdünnten Dünnlauge wurde wie in Beispiel 1 beschrieben, oxidiert. Der OC-Gehalt der oxidierten Lauge betrug 1,2 g/l, was einem Oxidationsgrad von 88 % entspricht. Unter den experimentellen Bedingungen ist jedoch kein Böhmit ausgefallen. Die $Na_2O$ frei-Konzentration der oxidierten Lauge betrug 98 g/l (K = 2,02).

Der Versuch wurde deshalb mit weiteren 30 ml der in bezug auf den OC-Gehalt verdünnten Dünnlauge wiederholt. Es wurden jedoch 143 g/l Aluminiumoxid in Form von Aluminiumhydroxid hinzugegeben. Nach Oxidation der Lauge und Abkühlung auf 95 °C waren 80 g/l Aluminiumoxid als Böhmit ausgefallen. Der OC-Gehalt der oxidierten Lauge betrug 1,7 g/l, was einem Oxidationsgrad von 82 % entspricht. Die $Na_2O$ frei-Konzentration der oxidierten Lauge betrug 100,5 g/l (K = 0,74).

Beispiel 4

30 ml einer Reinlauge (Zusammensetzung: $Na_2O$ frei ca. 122,9 g/l; $Al_2O_3$ ca. 144,2 g/l; organischer Kohlenstoffgehalt ca. 9,7 g/l) aus einem Bayer-Prozeß wurden in einen 100 ml korrosionsfreien Stahlautoklaven gegeben und unter denselben Bedingungen wie im Beispiel 1 beschrieben, oxidiert.

Der organische Kohlenstoffgehalt der oxidierten Lauge lag bei 1,3 g/l, d.h. der Oxidationsgrad betrug 87 %. Die $Na_2O$ frei-Konzentration der oxidierten Lauge betrug 80,4 g/l. Aufgrund des erreichten K-Wertes von 0,92 ist Böhmit ausgefallen. Der Kupfergehalt der oxidierten Lauge lag unter 1 mg/l.

Beispiel 5

30 ml einer Reinlauge (Zusammensetzung: $Na_2O$ frei ca. 141,0 g/l; $Al_2O_3$ ca. 138,1 g/l; organischer Kohlenstoffgehalt ca. 17,9 g/l) aus einem Bayer-Prozeß wurden in einen 100 ml korrosionsfreien Stahlautoklaven gegeben und unter denselben Bedingungen wie im Beispiel 1 beschrieben, oxidiert. Es wurde jedoch dieses Mal anstelle von Kupfersulfat Kupferoxid entsprechend einer Kupfermenge von 500 mg/l Kupfer verwendet.

Der organische Kohlenstoffgehalt der oxidierten Lauge lag bei 2,5 g/l, d.h. der Oxidationsgrad betrug 86 %. Die $Na_2O$ frei-Konzentration der oxidierten Lauge betrug 64,1 g/l. Aufgrund des erreichten K-Wertes von 0,76 ist Böhmit ausgefallen. Der Kupfergehalt der oxidierten Lauge lag unter 1 mg/l.

Beispiel 6

30 ml einer teilweise eingedampften Dünnlauge (Zusammensetzung: $Na_2O$ frei ca. 168,8 g/l; $Al_2O_3$ ca. 94,9 g/l; organischer Kohlenstoffgehalt ~ 17,7 g/l) aus einem Bayer-Prozeß wurden in einen 100 ml korrosionsfreien Stahlautoklaven gegeben und unter denselben Bedingungen wie im Beispiel 1 beschrieben oxidiert.

Der organische Kohlenstoffgehalt der oxidierten Lauge lag bei 0,45 g/l, d.h. der Oxidationsgrad betrug 95 % und die $Na_2O$ frei-Konzentration 88,3 g/l (K = 1,53). Trotz des hohen Oxidationsgrades fiel kein Böhmit aus.

Das obengenannte Experiment wurde mit weiteren 30 ml derselben, teilweise eingedampften Dünnlauge wiederholt. Es wurde jedoch dieses Mal vor der Oxidation in die auf 75 °C erhitzte Lauge $CO_2$-Gas eingeleitet und eine $Na_2O$ frei-Konzentration von 129,1 g/l eingestellt. Bei einem 90 %-igen Oxidationsgrad sollte sich damit nach der Oxidation ein K-Wert um 1,1 ergeben.

Der organische Kohlenstoffgehalt der oxidierten Lauge lag bei 1,2 g/l, d.h. der Oxidationsgrad betrug 93 % und die $Na_2O$ frei-Konzentration 61,0 g/l (K = 1,06). Wie vorauszusehen war, fiel trotz des hohen Oxidationsgrades kein Böhmit aus.

Die oxidierte Lauge war blau gefärbt und klar. Es waren somit alle Kupferionen noch in Lösung. In dieser Lauge konnte durch Einleiten einer relativ kleinen Menge $CO_2$-Gas bei 95 °C unter Normaldruck die Kristallisation von kupferhaltigem Bayerit initiiert werden. Die gesamten Kupferionen wurden aus der oxidierten Lauge durch Mitfällung mit dem Bayerit entfernt. Die überstehende Lauge war farblos und klar.

Der kristalline kupferhaltige Bayerit ist filtrierbar und kann direkt als Katalysatorträger zurückgeführt und wieder eingesetzt werden. Der Bayeritniederschlag entsprach einem Aluminiumoxidgehalt von 19 g/l.

Das oben beschriebene Experiment wurde mit dem gesamten ausgefällten kupferhaltigen Bayerit ohne weitere Kupferzugabe wiederholt. Die $Na_2O$ frei-Konzentration wurde dieses Mal vor der Oxidation durch Einleiten von $CO_2$-Gas bei 75 °C auf 136,1 g/l reduziert. Der organische Kohlenstoffgehalt der oxidierten Lauge lag bei 1,6 g/l, d.h. der Oxidationsgrad betrug 95 % und die $Na_2O$ frei-Konzentration der oxidierten Lauge 64,2 g/l. Aufgrund des erreichten K-Wertes von 0,93 wurde Böhmit ausgefällt.

Die Beispiele demonstrieren, daß der gewünschte kupferhaltige Böhmitniederschlag nach der Oxidation des organischen Kohlenstoffgehalts zu Karbonat durch Erhöhen der Aluminiumoxidkonzentration und/oder Erniedrigung der $Na_2O$ frei-Konzentration in der zu oxidierenden Lauge erzielt werden kann.

Die Beispiele 2 und 3 zeigen sowohl die Arbeitsweise mit der Zugabe des zusätzlichen Aluminiumoxids als auch den Vorteil, daß nach der Oxidation weniger Böhmit auskristallisiert, als - bezogen auf Aluminiumoxid - für den folgenden Oxidationszyklus benötigt wird. Es entsteht somit kein Überschuß an kupferhaltigem Böhmit.

Das Beispiel 6 zeigt, daß bei Ausbleiben einer Böhmitkristallisation im Autoklaven nach der Oxidation der Organica durch Einleiten von $CO_2$-Gas unter Normaldruck die Kristallisation von kupferhaltigem Bayerit ausgelöst werden kann. Bayerit hat nicht den gleichen Grad an Kristallinität wie Böhmit. Er ist jedoch filtrierbar. Es besteht damit, falls notwendig, ein weiteres leicht handhabbares Katalysatorrückführungssystem zur Verfügung.

In keinem der 6 Beispiele war eine Störung durch kristallines Natriumoxalat zu beobachten. Die Oxalatkonzentration in den oxidierten Laugen lag immer niedrig genug, um eine Natriumoxalatkristallisation bei der Filtration des ausgefallenen Böhmits oder Bayerits unter den gegebenen experimentellen Bedingungen auszuschließen.

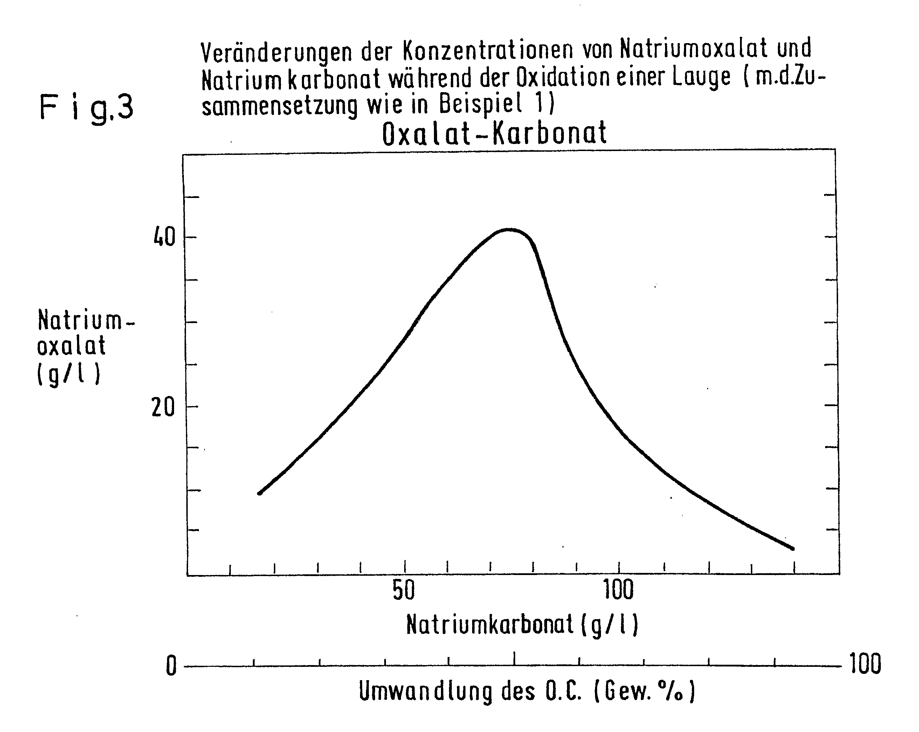

Die Oxidationsreaktion läuft sowohl über Natriumoxalat zu Natriumkarbonat als auch direkt zu Natriumkarbonat, d.h. es besteht ein dynamischer Zusammenhang zwischen Bildung und Zerstörung von Natriumoxalat während der Oxidation des organisch gebundenen Kohlenstoffs zu Karbonat in der Lauge. Eine Zusammenstellung der experimentellen Ergebnisse zeigt, daß die Natriumoxalatkonzentration auf Grund der vorhandenen organischen Salze bis auf ca. 40 g/l ansteigen kann (siehe Abb. 3). Um sicherzustellen, daß in der oxidierten Lauge weniger Natriumoxalat vorliegt als in der noch nicht oxidierten Lauge (Ausgangslauge) ist eine Umwandlung der Organica zu Natriumkarbonat von mehr als 80 % notwendig.

Der Einsatz des kupferhaltigen Böhmits und kupferhaltigen Bayerits als rückführbare Katalysatorträger ist im Vergleich zum Kupfersulfidkatalysator von Vorteil, weil

a) ein höherer Oxidationsgrad zu Karbonat möglich ist, da weder eine Einschränkung der Oxidationsbedingungen notwendig noch wünschenswert ist,

b) für die Oxidation nur eine Prozeßstufe erforderlich ist, da kristallines Natriumoxalat im Oxidationsschema keine Rolle spielt,

c) der erfindungsgemäße Katalysator mit Böhmit noch im Autoklaven während der normalen Verweilzeit bei höheren Temperaturen und Drücken quantitativ aus der oxidierten Lauge entfernt werden kann, und

d) vor der Rückführung der oxidierten Lauge in den Hauptkreislauf nur eine Kalkkaustizierung erforderlich ist, und

e) die Lauge für diese Kaustizierung eine optimale Temperatur hat.

Die vorliegende Erfindung hat somit ein breites Spektrum industrieller Vorteile.

## Ansprüche

1. Verfahren zur Verminderung von organischen Bestandteilen in aluminathaltigen Laugen des Bayer-Prozesses durch Oxidation mit sauerstoffhaltigem Gas unter erhöhtem Druck in Gegenwart von katalytisch wirkenden Metallionen, dadurch gekennzeichnet, daß die Metallionen mit Aluminiumhydroxid in Form eines kristallinen Niederschlags ausgefällt, von der oxidierten Lauge abgetrennt werden, und daß das metallionenhaltige Aluminiumhydroxid als Katalysatorträger in die Oxidationsstufe rezykliert wird.

2. Verfahren nach Anspruch 1, dadurch gekennzeichnet, daß während der Oxidation in der Lauge ein Molverhältnis von $Na_2O$ frei zu

$Al_2O_3 \leq 1$ erreicht wird, das Aluminiumhydroxid als Böhmit bei Temperaturen oberhalb von $120°C$ gefällt und als Katalysatorträger rezykliert wird.

3. Verfahren nach Anspruch 1, dadurch gekennzeichnet, daß die Fällung bei Temperaturen unter $120°C$ vorgenommen und der mit Metallionen beladene Bayerit rezykliert wird.

4. Verfahren nach einem der vorhergehenden Ansprüche, dadurch gekennzeichnet, daß als katalytisch wirkende Metallionen Kupferionen eingesetzt werden.

5. Verfahren nach einem der vorhergehenden Ansprüche, dadurch gekennzeichnet, daß die Oxidation mit Reinlauge, Dünnlauge und Mischungen derselben durchgeführt wird.

6. Verfahren nach einem der vorhergehenden Ansprüche, dadurch gekennzeichnet, daß mit dem rezyklierten, Metallionen-beladenen Aluminiumhydroxid zur Steuerung des Fällprozesses Aluminium oder Aluminiumverbindungen zugegeben werden.

7. Verfahren nach einem der vorhergehenden Ansprüche, dadurch gekennzeichnet, daß die Oxidationsbehandlung auf einen Seitenstrom der Kreislauflauge des Bayer-Prozesses verwendet wird.

8. Verfahren nach einem der vorhergehenden Ansprüche, dadurch gekennzeichnet, daß zur Steuerung des kupferhaltigen Böhmit- und Bayeritniederschlags $CO_2$-Gas zugegeben wird.

9. Verfahren nach einem der vorhergehenden Ansprüche, dadurch gekennzeichnet, daß die Oxidationsbehandlung auf im wesentlichen feststofffreie Kreislauflauge des Bayer-Prozesses angewendet wird.

10. Verfahren nach einem der vorhergehenden Ansprüche, dadurch gekennzeichnet, daß die oxidierte Lauge nach Abtrennung des Metallionen-beladenen Hydroxids verdünnt und kaustiziert wird bevor sie in den Hauptkreislauf des Bayer-Prozesses zurückgeführt wird.

## Claims

1. A method of decreasing the amount of organic constituents in aluminate-containing liquors in the Bayer process by oxidation with oxygen-containing gas at elevated pressure in the presence of catalytically active metal ions, characterised in that the metal ions are precipitated with aluminium hydroxide in the form of a crystalline deposit and are separated from the oxidized liquor, and the aluminium hydroxide containing metal ions is recycled as a catalyst carrier to the oxidation step.

2. A method according to claim 1, characterised in that during oxidation in the liquor, a molar ratio of free $Na_2O$ to $Al_2O_3 \leq 1$ is reached, and the aluminium hydroxide is precipitated as boehmite at temperatures above $120°C$ and is recycled as a catalyst carrier.

3. A method according to claim 1, characterised in that precipitation is brought about at temperatures below $120°C$ and the bayerite charged with metal ions is recycled.

4. A method according to any of the preceding claims, characterised in that copper ions are used as the catalytically active metal ions.

5. A method according to any of the preceding claims, characterised in that oxidation is carried out with pure liquor, thin liquor and mixtures thereof.

6. A method according to any of the preceding claims, characterised in that in order to control the precipitation process, aluminium or aluminium compounds are added to the recycled aluminium hydroxide charged with metal ions.

7. A method according to any of the preceding claims, characterised in that the oxidation treatment is brought about on a side stream of the circulating liquor in the Bayer process.

8. A method according to any of the preceding claims, characterised in that $CO_2$ gas is added in order to control the deposit of copper-containing boehmite and bayerite.

9. A method according to any of the preceding claims, characterised in that the oxidation treatment is carried out on the circulating liquor in the Bayer process when substantially free of solids.

10. A method according to any of the preceding claims, characterised in that after the hydroxide charged with metal ions has been separated, the oxidized liquor is diluted and causticated before being returned to the main circuit in the Bayer process.

## Revendications

1. Procédé pour diminuer les quantités des constituants organiques contenus dans les lessives d'aluminate du procédé Bayer par oxydation à l'aide d'un gaz contenant de l'oxygène sous pression en présence d'ions métalliques agissant comme catalyseurs, caractérisé en ce que les ions métalliques précipités à l'état cristallisé avec l'hydroxyde d'aluminium sont séparés de la lessive oxydée, et l'hydroxyde d'aluminium contenant les ions métalliques est recyclé au stade d'oxydation en tant que véhicule du catalyseur.

2. Procédé selon la revendication 1, caractérisé en ce que, au cours de l'oxydation, on atteint dans la lessive un rapport molaire $Na_2O$ libre/$Al_2O_3$ inférieur ou égal à 1, on précipite l'hydroxyde d'aluminium à l'état de böhmite à des températures supérieures à 120°C et on le recycle en tant que véhicule du catalyseur.

3. Procédé selon la revendication 1, caractérisé en ce que la précipitation est réalisée à des températures inférieures à 120°C et la bayerite chargée d'ions métalliques est recyclée.

4. Procédé selon l'une des revendications qui précèdent, caractérisé en ce que les ions métalliques utilisés pour leur activité catalytique sont des ions cuivre.

5. Procédé selon l'une des revendications qui précèdent, caractérisé en ce que l'oxydation est effectuée sur de la lessive pure, de la lessive diluée ou un mélange de ces lessives.

6. Procédé selon l'une des revendications qui précèdent, caractérisé en ce que, avec l'hydroxyde d'aluminium chargé d'ions métalliques recyclé on ajoute, pour contrôler l'opération de précipitation, de l'aluminium ou des composés de l'aluminium.

7. Procédé selon l'une des revendications qui précèdent, caractérisé en ce que le traitement d'oxydation est exploité sur un courant latéral de la lessive en circulation du procédé Bayer.

8. Procédé selon l'une des revendications qui précèdent, caractérisé en ce que, pour le réglage de la précipitation de böhmite ou de bayerite cuivreuse, on introduit du $CO_2$ gazeux.

9. Procédé selon l'une des revendications qui précèdent, caractérisé en ce que le traitement d'oxydation est appliqué à la lessive en circulation, essentiellement exempte de matières solides, du procédé Bayer.

10. Procédé selon l'une des revendications qui précèdent, caractérisé en ce que la lessive oxydée, après séparation de l'hydroxyde chargé d'ions métalliques, est diluée et caustifiée avant d'être recyclée dans le circuit principal du procédé Bayer.

# Fig.1  Fließdiagramm ( Kupfer-Böhmit )

Bayerlauge

$O_2$

Al$(OH)_3$ → Autoclav

$CO_2$ → 

Cu/Böhmit

Abkühlung → Filtration

$H_2O$ → Kaustizierung

Kaustizierte Salze

Rückführung der oxidierten Lauge

EP 0 197 269 B1

**F i g.2**      Fließdiagramm (Kupfer-Bayerit)

Bayerlauge

$O_2$

$Al(OH)_3$

$CO_2$

Autoclav

Cu/Bayerit

Abkühlung

Cu/Bayerit Kristallisation

$H_2O/CO_2$

Rückführung der oxidierten Lauge

Filtration

$H_2O$

Kaustizierung

Kaustizierte Salze

EP 0 197 269 B1

Veränderungen der Konzentrationen von Natriumoxalat und Natriumkarbonat während der Oxidation einer Lauge ( m.d.Zusammensetzung wie in Beispiel 1)

Fig.3

Oxalat-Karbonat